# EUROPEAN PATENT APPLICATION

(11) **EP 3 588 904 A1**
(43) Date of publication of application: **01.01.2020**
(21) Application number: 19180711.4
(22) Date of filing: 17.06.2019
(51) Int. Cl.: H04L 29/06, G06F 21/57, H04W 12/06

(54) **SECURED AND EASY DEPLOYMENT OF SERVERS IN VIRTUAL ENVIRONMENT**

(30) Priority: 22.06.2018 US 201816016383
(71) Applicant: Polycom, Inc., San Jose, CA 95002 (US)
(72) Inventor: Weissblat, Assaf, 49130 Petach-Tikvah (IL)
(74) Representative: Käck, Stefan

(57) **Abstract**

A technique for deploying virtual servers installs a certificate authority certificate for a manager server in a virtual server image. When the virtual server image is instantiated (315) by the manager server, the virtual server creates (320) a public-private key pair, and generates (325) a certificate signing request that includes the public key for the virtual server. The virtual server signs (330) the request with the private key of the virtual server. The manager server, upon receiving the request, creates (345) a public key certificate and signs the certificate with the private key of the manager server. The manager server then sends (350) the public key certificate to the virtual server.

## Description

### TECHNICAL FIELD

The present invention relates to the field of computing, and in particular to techniques for deploying multiple server applications in virtual environments.

### BACKGROUND ART

There is a common need to instantiate and configure multiple servers in virtual environments in which the multiple servers need to communicate with each other, including logging in to each other. Currently, this deployment of virtual servers is performed by manually configuring user and password values in each deployed virtual server. The effort involved is significant, and security holes in the configuration and deployment process are common.

Alternatives that have been employed use "pre-configured" users and passwords, which have their own security holes. This alternative procedure is not always usable, such as where there is a server role that has multiple instances.

A more secure and simpler approach to deploying and configuring authentication in virtual servers would be desirable.

### SUMMARY OF INVENTION

The invention is defined in claims 1, 2, 3, 14, and 15, respectively. Particular embodiments are set out in the dependent claims.

A method of deploying virtual servers is disclosed. The method comprises installing a certificate authority certificate for a manager server in a virtual server image; instantiating a virtual server with the virtual server image by the manager server; creating a public key and a private key by the virtual server; generating a certificate signing request by the virtual server that includes the public key of the virtual server, signed with the private key of the virtual server; sending the certificate signing request to the manager server; creating a public key certificate from the certificate signing request signed by the private key of the manager server; and sending the public key certificate from the manager server to the virtual server.

Further, a non-transitory machine readable medium stores software for deploying virtual servers, wherein the software comprises instructions that when executed cause a processor of a manager server to install a certificate authority certificate for the manager server in an image for instantiating a virtual server; instantiate the virtual server with the virtual server image; receive a certificate signing request from the virtual server signed with a private key of the virtual server; create a public key certificate from the certificate signing request; and send the public key certificate to the virtual server.

The software may further comprise instructions that when executed cause the processor of the manager server to revoke or renew the public key certificate of the virtual server upon expiration of the public key certificate; to create a new public key certificate from a new certificate signing request from the virtual server; and/or to verify the certificate signing request using the public key of the virtual server. The certificate authority certificate may be a self-signed certificate.

Another non-transitory machine readable medium stores software for use by a virtual server, wherein the software comprises instructions that when executed cause a virtual processor of the virtual server to create a public key and a private key for the virtual server in a secure environment; generate a certificate signing request that includes the public key of the virtual server, signed with the private key of the virtual server; send the certificate signing request to a manager server serving as certificate authority for the virtual server; and receive a public key certificate from the manager server responsive to the certificate signing request.

The software on the other non-transitory machine readable medium may further comprise instructions that when executed cause the virtual processor of the virtual server to establish an encrypted connection between the virtual server and the manager server or another virtual server using the public key certificate; to create a new public key and private key for the virtual server, generate a new certificate signing request using the new public and private keys, and receive a new public key certificate from the manager server responsive to the new certificate signing request; and/or to verify the public key certificate received from the manager server using a public key of the manager server. The certificate signing request may comprise a service type of the virtual server.

### BRIEF DESCRIPTION OF DRAWINGS

The accompanying drawings, which are incorporated in and constitute a part of this specification, illustrate an implementation of apparatus and methods consistent with the present invention and, together with the detailed description, serve to explain advantages and principles consistent with the invention. In the drawings,
Figure 1 is a block diagram illustrating communication between a server manager and a plurality of servers according to one embodiment.
Figure 2 is a graph illustrating data flows between a server manager and a managed server according to one embodiment.
Figure 3 is a flowchart illustrating a technique for using a certificate signing request procedure according to one embodiment.
Figure 4 is a block diagram of an embodiment of a computer for use in various embodiments.

### DESCRIPTION OF EMBODIMENTS

In the following description, for purposes of explanation, numerous specific details are set forth in order to provide a thorough understanding of the invention. It will be apparent, however, to one skilled in the art that the invention may be practiced without these specific details. In other instances, structure and devices are shown in block diagram form in order to avoid obscuring the invention. References to numbers without subscripts or suffixes are understood to reference all instance of subscripts and suffixes corresponding to the referenced number. Moreover, the language used in this disclosure has been principally selected for readability and instructional purposes, and may not have been selected to delineate or circumscribe the inventive subject matter, resort to the claims being necessary to determine such inventive subject matter. Reference in the specification to "one embodiment" or to "an embodiment" means that a particular feature, structure, or characteristic described in connection with the embodiments is included in at least one embodiment of the invention, and multiple references to "one embodiment" or "an embodiment" should not be understood as necessarily all referring to the same embodiment.

As used herein, the term "a computer system" can refer to a single computer or a plurality of computers working together to perform the function described as being performed on or by a computer system.

This solution uses a PKI (Public Key Infrastructure) suite in which public-private key pairs are generated and used. While PKI provides the methods for creating private and public keys and other methods of securing them, it does not address the automation of installation of certificates in virtual machine environments where multiple servers need to communicate with each other in a secure way without human intervention.

Current server installation is manual and requires either using user and password or manual certificate installation per server. That burdens the IT administrator and requires planning and significant administrator time where large numbers of server installations and management is required, and is infeasible in situations with a need for quick, dynamic instantiation of virtual servers that may have short lives.

The techniques described below allow installation and maintenance of virtual servers that can be quick, automatic, easy, and achieved without human intervention. In addition, these techniques can be more secure than using user/password methods.

These techniques improve real-time applications, such as video conferencing, which may use multiple server topologies that requires high real-time scalability, as a result of changes in video conferencing port demand. In such cases, there is a requirement to spin-up new servers in seconds and to establish a secured connection between those new servers and the existing ones, because different servers have distinct roles and they need to communicate with each other in order to form one real-time video conferencing solution. In addition, the virtual servers may have short life spans between instantiation and termination.

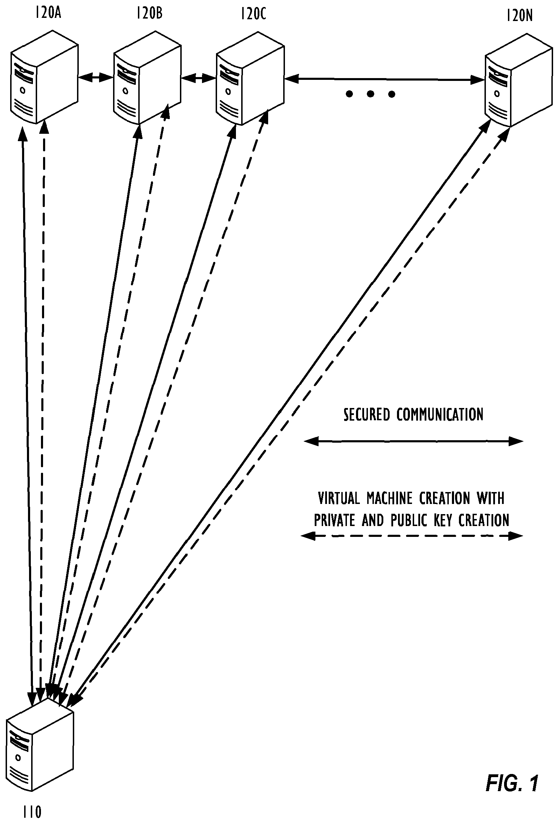

FIG. 1 is a block diagram illustrating a system for instantiating virtual servers according to various embodiments. In a deployment phase, a manager server 110 is responsible for causing the instantiation of the virtual servers 120A-120N that are to be deployed in their respective virtual environments. Any desired type of virtual environment can be used, including virtual machines and containers.

The manager server 110 serves as a certificate authority (CA) to the virtual servers 120A-120N that are being deployed by the manager server 110. In some embodiments, the manager server 110's CA certificate is a self-signed certificate. Various embodiments may use open source libraries, such as OpenSSL®, that give one or more utilities for creating public and private keys, using a variety of different certificate formats. (OPENSSL is a registered trademark of the OpenSSL Software Foundation.) The manager server 110 is aware of the number of servers 120 being deployed and may generate authentication credentials for each of them.

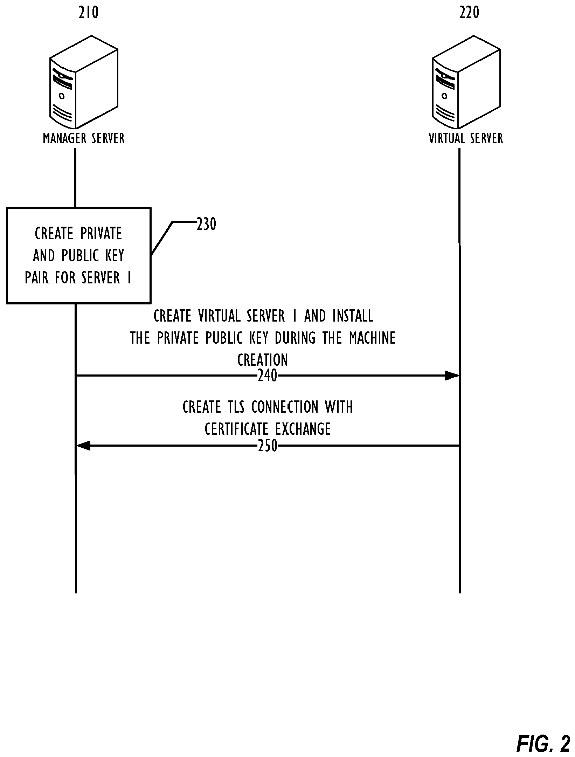

In one embodiment, illustrated in the block diagram of FIG. 2, the manager server 210 (corresponding to manager server 110 of FIG. 1) creates public and private key pairs for virtual server 220 (corresponding to each of the virtual servers 120A-120N of FIG. 1) in block 230, prior to instantiation of virtual server 220. The manager server 210 may in action 240 then create virtual server 220 and install the public-private key pair for virtual server 220 in that instance of the virtual server 220. The manager server 210 may also install the manager server 210's public certificate as a CA certificate in all instances of virtual servers 220.

The installation of keys and certificates may be implemented in some embodiments by embedding the files in the virtual server images instantiated in each virtual server 120A-120N in a predefined location in the virtual server image that is known to the manager server 210 and each virtual server 220. Alternatively, the manager server 210 may use a virtual application programming interface (API), e.g., OpenStack® file injection or a vendor specific API, to inject a file with the public key of the manager server 210 into the virtual server 220. (OPENSTACK is a registered trademark of OpenStack Foundation.)

Using the public-private key pair enables authentication of each of the deployed virtual servers 120A-120N and the manager server 110 and also enables encryption through using Transport Layer Security (TLS) connections with certificate exchanges in action 250 that can start with asymmetric encryption and continue with symmetric encryption. However, public-private key injection is less secure than the certificate based approach described below.

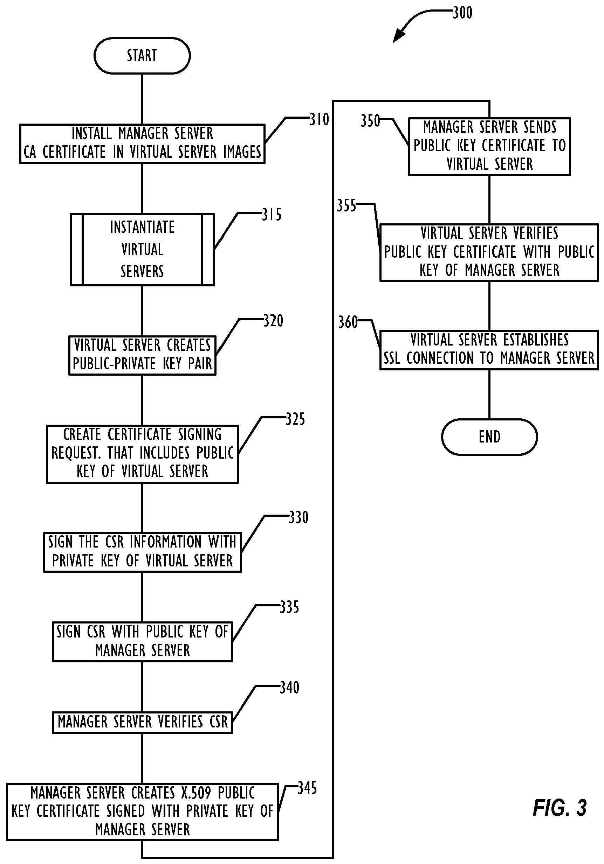

In another embodiment a certificate signing request (CSR) procedure may be used for certificate creation in the deployed virtual servers 120A-120N. In this approach, illustrated in the flowchart 300 of FIG. 3, the manager server 110 may install its CA certificate in block 310 in each deployed virtual server 120A-120N as part of the virtual server images being instantiated. Every instance of a deployed virtual server 120A-120N is then instantiated by the manager server 110 in block 315. Each virtual server 120A-120N then may create a CSR request signed by the CA public key as described below.

The procedure for creating a CSR involves the deployed server first generating a private and public key pair in block 320. Any desired technique for creating a public-private key pair may be used. Preferably, the deployed virtual server 120 may create the private and public keys in a secure environment such as a sandbox. By creating the private and public keys on the deployed virtual servers 120A-120N, there is no need to provision those keys by the CA (the manager server 110), avoiding the need to transmit them from the CA to the deployed virtual servers 120A-120N.

The CSR is then created in block 325 and contains information identifying the deployed virtual server 120, the public key of the deployed server 120, and optionally a set of attributes constructed by the deployed server 120. For example, the CSR attribute information may include a service type that may be used to differentiate between instances of the virtual servers 120A-120N. In another example, the CSR attribute The CSR also contains a signature algorithm identifier and a signature of the CSR information signed by the deployed virtual server 120's private key in block 330. The CSR may also contain any other credentials or other proofs of identity required by the manager sever 110, and the manager server 110 as CA may request additional information from the deployed server as desired. Finally the CSR is signed with the public key of the CA in block 335 before sending it to the CA.

The CA receives the CSR with the signature and verifies the CSR in block 340 using the public key of the virtual server 120. Once verified, the CA transforms the request into an X.509 public-key certificate signed with the private key of the CA in block 345. The CA then returns the certificate to the deployed virtual server 120 in block 350. This results in every instance of the deployed virtual servers 120A-120N having a public and private key and a public-key certificate. In block 355, the deployed virtual servers 120A-120N can use the CA's public key to verify the public key certificate received from the CA.

The CA public key may be used only after all certificate generation has been completed. The manager server 110 serving as the CA is aware of the number of virtual server instances that were deployed (because the manager server 110 spawned them), and can ensure that no fake entity can impose itself as one of the deployed servers.

Once each instance of the deployed virtual servers 120A-120N has its own private key, its own public key, the CA public key, and the public key certificate, the deployed virtual servers 120A-120N may use the public key certificate to individually establish in block 360 a Secure Sockets Layer (SSL) connection that includes both server and client certificate handshakes and verify the identity of the client/server against the CA certificate. This allows secured encrypted connections for communication among the various virtual servers 120A-120N and between the virtual servers 120A-120N and the manager server 110, as illustrated in FIG. 1.

In some embodiments, the virtual servers 120A-120N and manager server 110 use the Simple Certificate Enrollment Protocol (SCEP) for using the CA's certificate to secure the message exchange for the CSR. The SCEP is described in the Internet Draft document entitled "Simple Certificate Enrolment Protocol, draft-gutman-scep-10" published by the Internet Engineering Task Force, which can be found in tools.ietf.org/html/draft-gutman-scep-10, and which is incorporated by reference herein in its entirety for all purposes.

Because the virtual servers 120A-120N may be short-lived, being created and terminated dynamically as needed, the manager server 110 may in some embodiments where the lifetime of a virtual server 120 is known set a lifetime for the X.509 public key certificate sent to the virtual server 120 based on the lifetime of the virtual server 120. In some embodiments, where the lifetime of the virtual server 120 is unknown a priori, the manager server 110 may revoke the X.509 public key certificate provided to the virtual server 120 as part of a procedure of terminating the virtual server 120. In some embodiments, where the lifetime of the virtual server 120 exceeds an expiration lifetime of the X.509 public key certificate, the virtual server 120 may need to renew the X.509 public key certificate. In some scenarios, the renewal may also require the virtual server 120 to generate a new private-public key pair and make a new CSR to certify the new public key for the virtual server 120. Similarly, if for any other reason the virtual server 120 needs to generate a new public-private key pair, such as compromise of the private key, a new CSR may be used to certify the new public key and a revocation of the prior X.509 public key certificate may be performed.

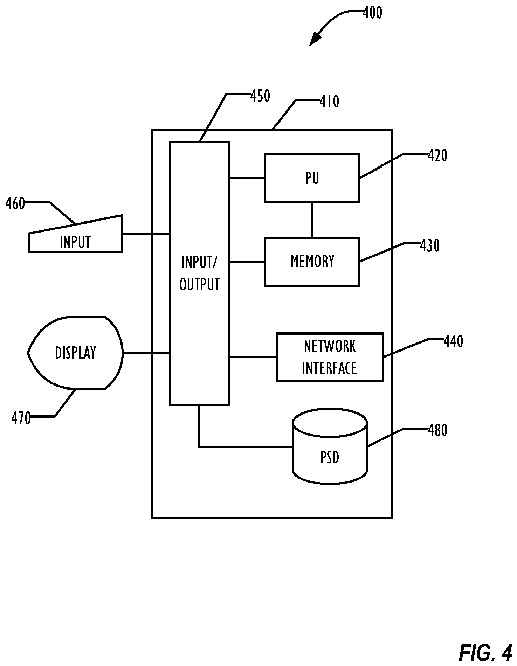

Referring now to FIG. 4, an example computer 400 for use as the manager server 110 or virtual servers 120A-120N is illustrated in block diagram form. The computer 400 may be either a physical or a virtual computer as desired, and the components and devices described below may be physical or virtual devices or components. Example computer 400 comprises a system unit 410 which may be optionally connected to an input device or system 460 (e.g., keyboard, mouse, touch screen, etc.) and display 470. A program storage device (PSD) 480 (sometimes referred to as a hard disc) is included with the system unit 410. Also included with system unit 410 is a network interface 440 for communication via a network with other computing and corporate infrastructure devices (not shown). Network interface 440 may be included within system unit 410 or be external to system unit 410. In either case, system unit 410 will be communicatively coupled to network interface 440. Program storage device 480 represents any form of non-transitory machine readable storage medium including, but not limited to, all forms of optical and magnetic, including solid-state, storage elements, including removable media, and may be included within system unit 410 or be external to system unit 410. Program storage device 480 may be used for storage of software to control system unit 410, data for use by the computer 400, or both.

System unit 410 may be programmed to perform methods in accordance with this disclosure (an example of which is in FIG. 3). System unit 410 comprises a processor unit (PU) 420, input-output (I/O) interface 450 and memory 430. Processing unit 420 may include any programmable controller device, such as microprocessors available from Intel Corp. and other manufacturers. Memory 430 may include one or more memory modules and comprise random access memory (RAM), read only memory (ROM), programmable read only memory (PROM), programmable read-write memory, and solid-state memory, which may store instructions that when executed cause the processor unit to perform the actions described above. These instructions may be loaded into memory from the program storage device 480. One of ordinary skill in the art will also recognize that PU 420 may also include some internal memory including, for example, cache memory.

It is to be understood that the above description is intended to be illustrative, and not restrictive. For example, the above-described embodiments may be used in combination with each other. Many other embodiments will be apparent to those of skill in the art upon reviewing the above description. The scope of the invention therefore should be determined with reference to the appended claims, along with the full scope of equivalents to which such claims are entitled.

## Claims

1. A method of deploying virtual servers (120A-N, 220), comprising:
installing (310) a certificate authority certificate for a manager server (110, 210) in a virtual server image;
instantiating (315) a virtual server (120A-N, 220) with the virtual server image by the manager server (110, 210);
creating (320) a public key and a private key by the virtual server (120A-N, 220);
generating (325) a certificate signing request by the virtual server (120A-N, 220) that includes the public key of the virtual server (120A-N, 220), signed (330) with the private key of the virtual server (120A-N, 220);
sending the certificate signing request to the manager server (110, 210);
creating (345) a public key certificate from the certificate signing request signed by the private key of the manager server (110, 210); and
sending (350) the public key certificate from the manager server (110, 210) to the virtual server (120A-N, 220).

2. A method for deploying virtual servers (120A-N, 220), wherein the method is performed by a manager server (110, 210) and comprises the steps of:
installing (310) a certificate authority certificate for the manager server (110, 210) in an image for instantiating a virtual server (120A-N, 220);
instantiating (315) the virtual server (120A-N, 220) with the virtual server image;
receiving a certificate signing request from the virtual server (120A-N, 220) signed with a private key of the virtual server (120A-N, 220);
creating (345) a public key certificate from the certificate signing request; and
sending (350) the public key certificate to the virtual server (120A-N, 220).

3. A method, wherein the method is performed by a virtual server (120A-N, 220) and comprises the steps of:
creating (320) a public key and a private key for the virtual server (120A-N, 220) in a secure environment;
generating (325) a certificate signing request that includes the public key of the virtual server (120A-N, 220), signed (330) with the private key of the virtual server (120A-N, 220);
sending the certificate signing request to a manager server (110, 210) serving as certificate authority for the virtual server (120A-N, 220); and
receiving a public key certificate from the manager server (110, 210) responsive to the certificate signing request.

4. The method of any of the preceding claims, further comprising:
establishing (360), by the virtual server (120A-N, 220), an encrypted connection between the virtual server (120A-N, 220) and the manager server (110, 210), using the public key certificate of the virtual server (120A-N, 220).

5. The method of any of the preceding claims, further comprising:
establishing, by the virtual server (120A-N, 220), an encrypted connection between the virtual server (120A-N, 220) and another virtual server, using the public key certificate of the virtual server (120A-N, 220).

6. The method of any of the preceding claims, further comprising:
revoking or renewing the public key certificate of the virtual server (120A-N, 220) upon expiration of the public key certificate.

7. The method of any of the preceding claims, further comprising:
creating a new public and private key by the virtual server (120A-N, 220);
generating a new certificate signing request by the virtual server (120A-N, 220) using the new public and private keys; and
receiving, by the virtual server (120A-N, 220), a new public key certificate from the manager server (110, 210) responsive to receipt of the new certificate signing request.

8. The method of any of claims 1, 2, and 4-7, where the certification authority certificate is a self-signed certificate.

9. The method of any claims 1 and 4-8, wherein creating (320) the public and the private key by the virtual server (120A-N, 220) comprises creating (320) the public key and the private key in a secure environment of the virtual server (120A-N, 220).

10. The method of any of the preceding claims, further comprising:
verifying (335) the public key certificate received from the manager server (110, 210) by the virtual server (120A-N, 220) using a public key of the manager server (110, 210).

11. The method of any of the preceding claims, wherein the certificate signing request comprises a service type information for the virtual server (120A-N, 220).

12. The method of any of the preceding claims, further comprising:
verifying, by the manager server (110, 210), the certificate signing request using the public key of the virtual server (120A-N, 220).

13. The method of any of the preceding claims, further comprising:
creating, by the manager server (110, 210), a new public key certificate from a new certificate signing request from the virtual server (120A-N, 220).

14. A computer-readable medium comprising instructions which, when executed by a processor (420), cause the processor (420) to carry out the method of any of claims 1-13.

15. A data processing system comprising one or more processors (420) configured to perform the method of any of claims 1-13.
